# EUROPEAN PATENT SPECIFICATION

(11) **EP 3 025 071 B1**
(45) Date of publication and mention of the grant of the patent: **18.03.2020**
(21) Application number: 14828753.5
(22) Date of filing: 24.07.2014
(51) Int. Cl.: F16F 15/123, B60K 25/02, F02B 67/06, F16F 7/00, F16H 55/36, F16H 7/18

(54) **ISOLATOR WITH IMPROVED DAMPING STRUCTURE**
ISOLATOR MIT VERBESSERTER DÄMPFUNGSSTRUKTUR
ISOLATEUR À STRUCTURE D'AMORTISSEMENT AMÉLIORÉE

(30) Priority: 24.07.2013 US 201361858030 P
(43) Date of publication of application: 01.06.2016
(73) Proprietor: Litens Automotive Partnership, Woodbridge, Ontario L4L 5T7 (CA)
(72) Inventor: DELL, James W., Newmarket, Ontario L3X 1T6 (CA)
(74) Representative: Grünecker Patent- und Rechtsanwälte PartG mbB
(86) International application number: PCT/CA2014/000592
(87) International publication number: WO 2015/010190

(56) References cited:
- EP-A1- 2 273 144
- WO-A1-2005/028899
- WO-A2-2008/049388
- DE-A1-102007 058 018
- DE-A1-102009 052 058
- DE-C1- 4 424 988

## Description

### CROSS-REFERENCE TO RELATED APPLICATIONS:

### FIELD

The present invention relates to isolators and in particular isolators for use between the engine crankshaft and an endless drive member such as a belt.

A generic isolator considered to form the closest prior art for the subject-matter of claim 1, is known, for instance, from DE 10 2007 058018 A1. Further insulators, wherein a spring shell surrounding the coil springs are provided, are known from DE 10 2009 052058 A1 and DE 44 24 988 C1.

### BACKGROUND

An isolator is usually used for isolating a crankshaft pulley and its associated belt (e.g. an accessory drive belt) from torsional vibration from the crankshaft that is a result of reciprocation of masses (e.g. pistons) in an internal combustion engine, and in particular engines with certain cylinder counts such as four-or- three cylinder engines, and diesel engines. Such isolators are useful, however, there is a continued need to improve the isolation provided by such devices, so as to reduce the amount of force transmitted to the pulley (and therefore to the accessory drive belt).

There is separately a continued need to reduce the parts count that a manufacturer must maintain in inventory when building a vehicle or in building a component of a vehicle such as an isolator.

### SUMMARY

In particular, it is provided an isolator having the features defined in claim 1. Further inventive embodiments are defined in the dependent claims.

In another aspect, ah isolator is provided for isolating torsional vibration between an input member and an output member. The isolator includes a driver that is engageable with one of the input and output members, a pulley that is engageable with the other of the input and output members, at least one isolator spring, and a spring shell. The driver engages one end of at least one isolation spring. The pulley engages the other end of the at least one isolation spring such that torque is transmitted between the driver and the pulley through the at least one isolation spring. The spring shell at least partially surrounds the at least one isolation spring. The spring shell includes a first spring shell portion and a second spring shell portion. Each spring shell portion includes a spring shell portion body at least one clip member and at least one clip receiving shoulder positioned 180 degrees from the at least one clip member and configured to lockingly receive the at least one clip member from the other spring shell portion.

In yet another aspect, an isolator is provided for isolating torsional vibration between an input member and an output member. The isolator includes a driver that is engageable with one of the input and output members, a pulley that is engageable with the other of the input and output members, at least one isolation spring that is positioned to transfer forces between the driver and the pulley and to isolate torsional vibrations in the driver and the pulley from one another, and a damping structure configured to frictionally resist relative movement between the driver and the pulley that is beyond a selected relative threshold angle, and to permit relative movement between the driver and the pulley within the selected relative threshold angle without frictional resistance from the damping structure.

Other features and advantages will be apparent by following the description with references to the drawings.

### BRIEF DESCRIPTION ON THE DRAWINGS

The foregoing and other aspects of the disclosure will be more readily appreciated by reference to the accompanying drawings, wherein:
Figure 1 is an elevation view of an engine with a crankshaft, a driven belt and an isolator in accordance with an embodiment of the present invention;
Figure 1a is a perspective right-side view of the isolator shown in Figure 1;
Figures 2 and 3 are perspective exploded views of the isolator shown in Figure 1a;
Figures 4 and 5 are perspective cross-sectional views of the isolator shown in Figure 1a;
Figure 6 is a perspective exploded view of a spring shell and spring that are part of the isolator shown in Figure 1a;
Figure 7 is a magnified elevation view of a portion of the isolator shown in Figure 1a, illustrating an idle condition of the engine when no torque transfer is taking place through the isolator;
Figure 8 is another magnified elevation view of a portion of the isolator shown in Figure 1a, illustrating a condition of the engine in which torque transfer is taking place through the isolator; and
Figure 9 is a graph illustrating the torque v. displacement relationship for the isolator shown in Figure 1a.

### DETAILED DESCRIPTION OF EMBODIMENTS

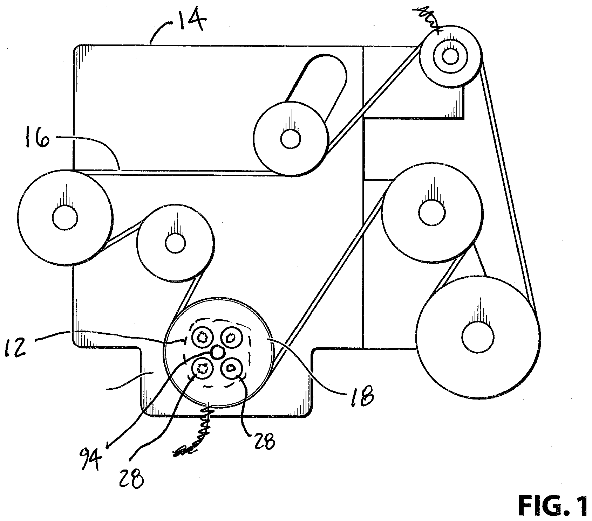

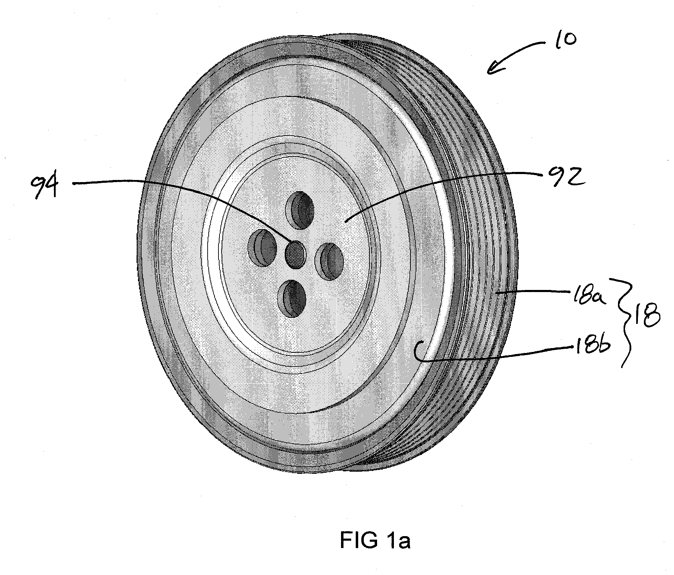

Reference is made to Figure 1, which shows an isolator 10 for transferring power between a crankshaft 12 on an engine 14 and an endless drive member 16, such as an accessory drive belt, in accordance with an embodiment of the present invention. The isolator 10 isolates the endless drive member 16 from vibrations or other sudden changes in torque in the crankshaft 12, and vice versa.

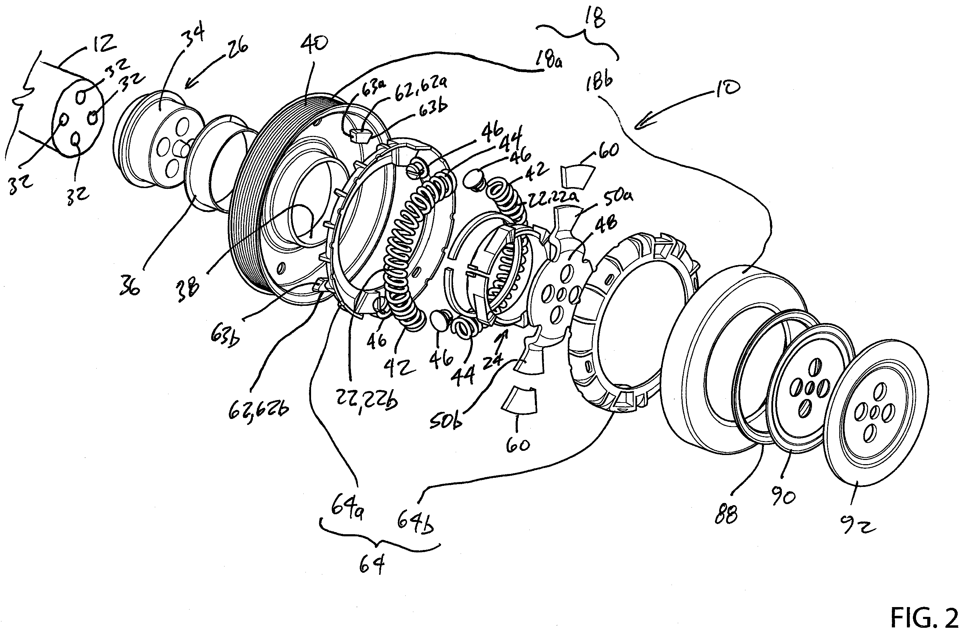

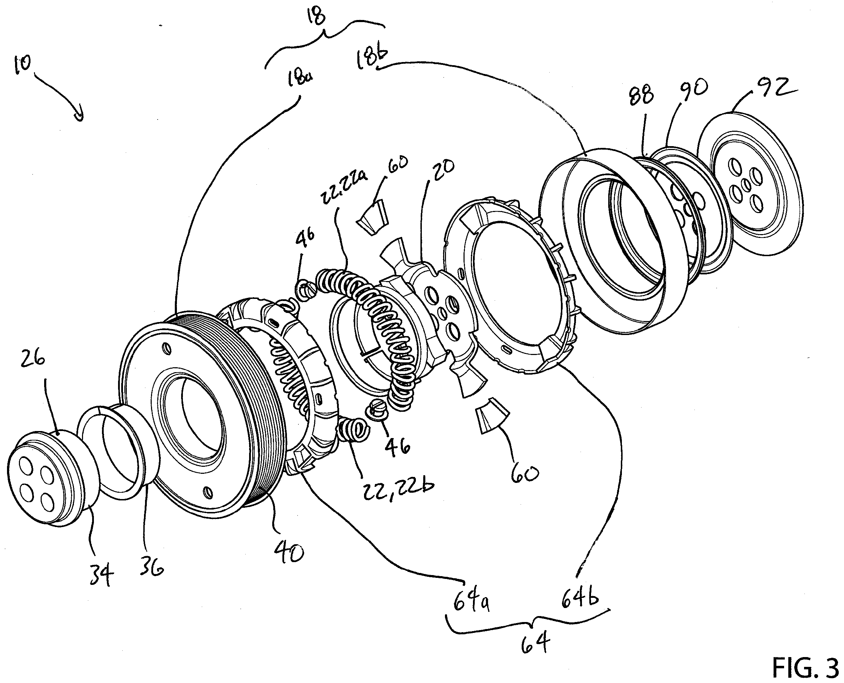

As seen in Figures 2 and 3, the isolator 10 includes a pulley 18, a driver 20, first and second isolation springs 22 (shown individually at 22a and 22b), and a damping structure 24.

The driver 20 is fixedly mountable in any suitable way to the crankshaft 12 for rotation about an axis A. For example, a shaft adapter 26 may be provided that mounts to the crankshaft 12 via a plurality of threaded fasteners (shown at 28 in Figure 1) such as four spline socket head cap screws that pass through apertures in the adapter 26 and into threaded apertures 32 in the end of the crankshaft 12.

The driver 20 may be made from any suitable material such as a suitable metal, such as steel.

The shaft adapter 26 may include a support surface 34 for supporting a bushing 36 that in turn supports a bushing engagement surface 38 on the pulley 18 so as to permit relative rotation between the pulley 18 and the crankshaft 12, the shaft adapter 26 and the driver 20. The bushing 36 may also include a radial lip that acts as a thrust bushing portion that is engaged by and supports the pulley 18 in the axial direction. The bushing 36 may be made from any suitable material such as nylon.

The pulley 18 is supported for rotation relative to the crankshaft 12 and is engageable with the belt 16. It will be noted that the term 'belt' is used for convenience, but instead it may be any suitable endless drive member. Analogously, the term 'pulley' is used for convenience, but instead it may be any suitable rotary member that is engageable with the endless drive member.

The pulley 18, in the embodiment shown has a belt engagement surface 40 that is configured to engage a poly-V groove belt. The pulley 18 may be made from two elements including a main portion 18a and a cover member 18b that is connected to the main portion 18a via any suitable means (e.g. by means of a press-fit). The pulley 18 may be made from any suitable material such as a suitable metal, such as steel.

The springs 22 elastically deform to isolate the endless drive member 16 and the crankshaft 12 from vibrations or other sudden changes in torque in one another. The springs 22 in the examples shown are arcuate, helical coil compression springs. However, any other suitable type of springs could be used, such as, for example, closed cell foam springs.

While two springs 22 are shown in the figures, it will be understood that an isolator having a damping structure that has a selected amount of clearance with the driver 20 providing the advantages described herein could be provided with a single spring 22, or with three or more springs.

The springs 22 each have a first end 42 and a second end 44. Each of the first and second ends 42 and 44 may optionally have a spring end bumper 46 thereon, which may be made from any suitable material such as nylon, to reduce the sound of impact between the end 42 or 44 and whichever of the driver 20 and the pulley 18 the end 42 or 44 is engaged with.

Engagement between the springs 22 and the driver 20 and the pulley 18 described as follows. The driver 20 has a central body 48, a first arm 50a and a second arm 50b. The driver 20 has a first spring engagement surface 52 on a first side 54 of each of the first and second arms 50a and 50b. The first spring engagement surfaces 52 are engageable with the first spring ends 42 of the springs 22 so as to transfer torque therebetween. The driver 20 has a second spring engagement surface 56 on a second side 58 of each of the first and second arms 50a and 50b. The second spring engagement surfaces 56 are engageable with the second spring ends 44 of the springs 22.

The driver 20 is shown as having an optional driver bumper 60 on each of the arms 50a and 50b so that all of the drive surfaces 52 and 56 are covered. Thus, engagement between the driver 20 and the springs 22 takes place through the bumpers 60 and 46. The bumpers 60 may be made from any suitable material such as nylon.

As shown in Figures 2 and 3, the pulley 18 has first and second lugs 62 (shown individually at 62a and 62b) thereon. The lugs 62 may be separate members that have projections that extend through apertures in the main portion 18a of the pulley 18 and that are welded to the main portion 18a to become integral therewith.

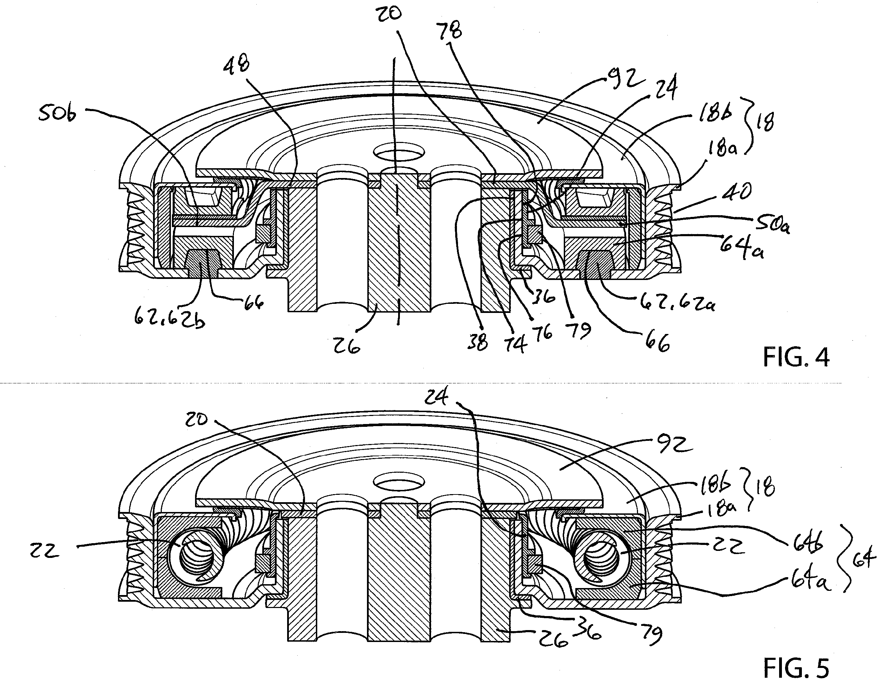

The lugs 62 have first and second spring end engagement surfaces thereon 63a and 63b (Figure 2), which are engageable with the first and second ends 42 and 44 of the springs 22 through an optionally provided spring shell 64. The spring shell 64 is provided in surrounding relationship with the springs 22 and prevents metal-to-metal contact between the springs 22 and the pulley 18 in embodiments wherein the springs 22 and pulley 18 are both metallic. The spring shell 64 may be fixedly mounted to the pulley 18 for movement therewith. To achieve this, the spring shell 64 may fit tightly between the main pulley portion 18a and the cover member 18b. The spring shell 64 may further include two lug receiving portions 66 (Figure 3 and 4) that are positioned to snugly receive the lugs 62, so that the spring shell 64 is rotationally fixed to the pulley 18. In addition, the spring shell 64 has first and second spring engagement surfaces 68a and 68b thereon that engage the ends 42 and 44 of the springs 22. Thus, the spring shell 64 transfers forces between the springs 22 and the pulley 18.

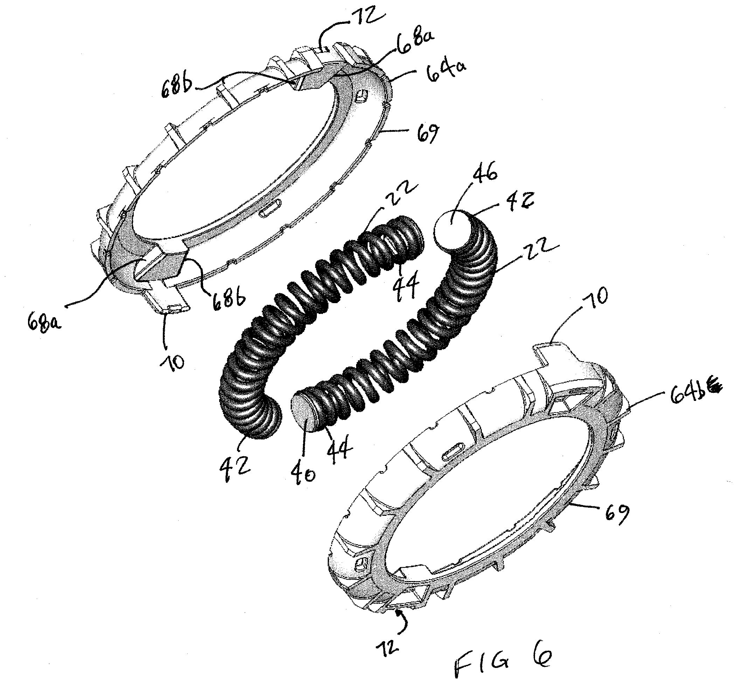

Referring to Figure 6, the spring shell 64 may be made from two spring shell portions 64a and 64b, which are assembled together without the use of separate fasteners or tools. The two portions, in the embodiment shown, are identical, thereby reducing the number of individual parts that are kept in inventory for the manufacture of the isolator 10. In the embodiment shown, each spring shell portion 64a and 64b includes a spring shell portion body 69 that partly encapsulates the springs 22. Each spring shell portion 64a and 64b further includes at least one clip member 70 on the body 69, and at least one clip receiving shoulder 72 on the body 69 but spaced 180 degrees apart from the clip member 70 and configured to lockingly receive the at least one clip member from the other spring shell portion.

By assembling them together in such a way that the clip member 70 of each of the shell portions 64a or 64b connects to the clip receiving shoulder 72, these two identical members 64a and 64b can have a snap-fit connection to each other without tools or separate fasteners.

While each spring shell portion 64a and 64b is shown as having one clip member 70 and one clip receiving shoulder 72, it is optionally possible to provide a plurality of clip members 70, wherein for each clip member there is a clip receiving shoulder 72 positioned 180 degrees from the associated clip member 70.

During operation of the isolator 10, it will be noted that the spring shell 64, which is surrounded on both axial sides as shown in Figure 5, may be made from a suitable material such as nylon. The spring shell 64 may be configured to undergo thermal expansion relative to the pulley 18 during operation of the isolator 10, which strengthens the engagement of the spring shell 64 with the pulley 18, so as to increase the surface areas of the spring shell 64 and pulley 18 through which torque is transferred.

The springs 22 may be preloaded so that when the engine is off and no torque is being transferred from the crankshaft 12 to the pulley 18 or vice versa, the springs 22 will be in a state of compression. This may be referred to sometimes as the 'no-load' state of the isolator 10. In the no-load state, the arms 50a and 50b are generally aligned with the lugs 62a and 62b on the pulley 18. Put another way, when no torque is being transferred, the driver 20 has a selected alignment with the pulley 18. During operation of the isolator 10, torque is exerted on the driver 20 from the crankshaft 12, through the shaft adapter 26. The driver arms 50a and 50b in turn exert a force on the first ends 42 of the springs 22 and the driver 20 pivots relative to the pulley 18 such that the arms 50a and 50b are no longer in alignment with the lugs 62a and 62b. The force is transferred through the springs 22 and from the second ends 44 of the springs 22 into the pulley 18 through the spring shell 64. Inertia in the pulley 18, inertia arising from the engagement of the pulley 18 with the belt 16 (Figure 1), causes the driver 20 to compress the springs 22 by some amount, before sufficient force is developed to move the pulley 18. Furthermore, even during steady state conditions of torque transfer the springs 22 will be in a compressed state, wherein the amount of compression of the springs 22 (and therefore the amount of angular offset between the driver 20 and the pulley 18 relative to the above mentioned selected alignment therebetween) is related to the amount of force being transferred through the springs 22.

The damping structure 24 is configured to frictionally resist relative movement between the driver 20 and the pulley 18 that is beyond a selected relative threshold angle, and to permit relative movement between the driver 20 and the pulley without frictional resistance within the selected relative threshold angle. In other words, the damping structure 24 will not impose frictional resistance on any relative movement between the driver 20 and the pulley 18 of less than a selected threshold angle. However, the damping structure 24 will impose frictional resistance to relative movement between the driver 20 and the pulley 18 of more than the selected threshold angle.

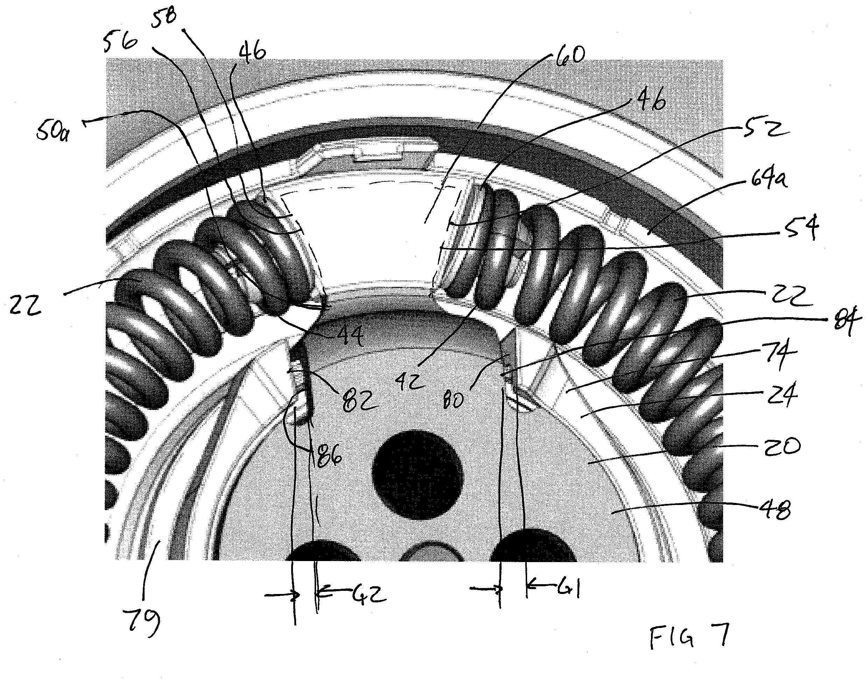

In the particular embodiment shown, the damping structure 24 includes a friction ring 74 that has a radially inner surface 76 that is frictionally engaged with a radially outer surface 78 of the pulley 18. A damping element spring 79 (which may, for example, be a single coil from a torsion spring) is engaged with the friction ring 74 and urges it into engagement with the surface 78 of the pulley 18 (Figures 4 and 5) with a selected force, thereby augmenting the frictional force therebetween to a selected frictional force. Referring to Figure 7, the friction ring 74 further includes at least one first driver engagement face 80 (in the embodiment shown there are two engagement faces 80) and at least one second driver engagement face 82 (in the embodiment shown there are two engagement faces 82). The first and second driver engagement faces 80 and 82 are engageable with at least one first damping structure engagement face 84 (in the embodiment shown there are two engagement faces 84) on the driver 20 and at least one second damping structure engagement face 86 (in the embodiment shown there are two engagement faces 86) on the driver 20. It will be noted that the engagement faces 84 and 86 are provided on the sides 54 and 58 respectively of the driver arms 50a and 50b. Thus the driver arms 50a and 50b include both the damping structure engagement faces 84 and 86 respectively, and the spring engagement faces 52 and 56 respectively.

As shown in Figure 7, there is a total angular clearance G between the driver 20 and the friction ring 74 which is made up of two angular clearances G1 and G2 on the two sides of the arms 50a and 50b with respect to the engagement faces 80 and 82 (i.e. between the engagement faces 84 and 86 and the engagement faces 80 and 82). Unless engaged by the driver 20, the friction ring 74 will remain frictionally engaged in some position relative to the pulley 18, thereby maintaining the angular clearances G1 and G2. By providing the angular clearances G1 and G2, during movement of the driver 20 relative to the pulley 18 within the aforementioned selected threshold angle (i.e. movement that is within the total angular clearance G), there is no engagement between the driver 20 and the friction ring 74 and therefore, the friction ring 74 does not move relative to the pulley 18. It will be understood that, while damping can be advantageous in certain situations, it does represent a force that is transmitted between the driver 20 and the pulley 18. Thus, by configuring the friction ring 74 to have the clearance G with the driver 20 the torsional vibrations that remain within the clearance G do not result in a damping force by the friction ring 74, thereby resulting in less of the fluctuating force transmitted from the driver 20 to the pulley 18.

For example, during idling of the engine 14, the driver 20 will move back and forth with a certain amplitude (e.g. between about 6 and 7 degrees in total) due to torsional vibration in the crankshaft 12 which naturally occurs in internal combustion engines. By selecting the total clearance G to be more (e.g. about 1 degree more) than the amplitude of the movement of the driver 20, there is no damping force transmitted between the driver 20 and the pulley 18 during idling. For example, the clearance G may be between about 7 and about 8 degrees in a case where the amplitude of the torsional vibrations mentioned above are between about 6 and 7 degrees.

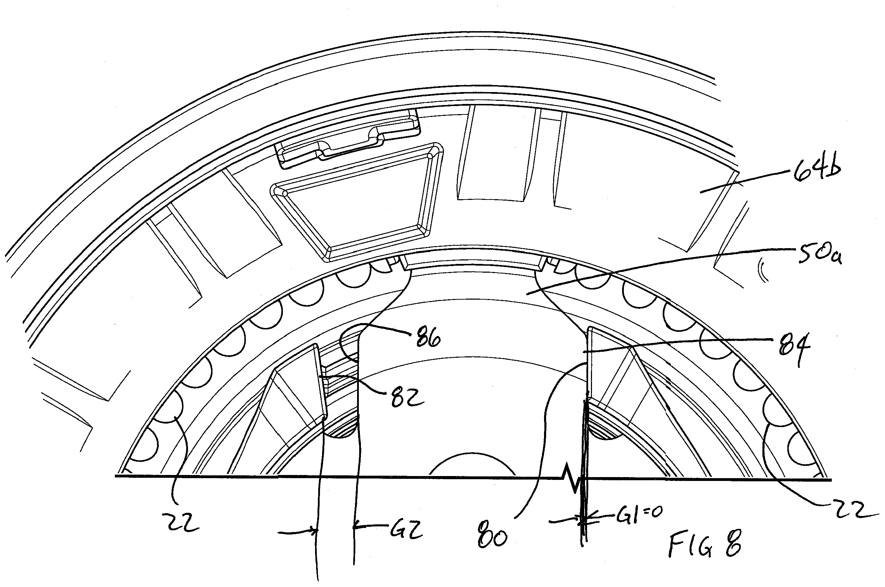

Figure 7 illustrates a situation when the engine 14 is off and there is therefore no load on the engine and no torque transfer between the engine 14 and the belt 16. When the engine 14 is turned on and is under some constant load (e.g. at idle with a certain number of accessories on), the driver 20 will rotate relative to the pulley 18 to a new position where they are offset by some angular amount that depends on the size of the load. Assuming that the rotation of the driver 20 is normally in the clockwise direction in the view shown in Figure 7, the relative movement between the driver 20 and the pulley 18, if large enough, will consume whatever clearance G1 there was with the friction ring 74, such that the driver 20 will drive the friction ring 74 to move (clockwise) relative to the pulley 18. Initially when reaching the new position the driver 20 will be abutted with the engagement faces 80 on the friction ring 74, as shown in Figure 8. However, as the crankshaft incurs torsional vibrations and transmits them to the driver 20, the driver 20 will nudge the friction ring 74 until there is no longer engagement between them. Thus a new equilibrium will be reached where there is again a non zero clearance G1 and G2 on each side of the driver 20 with respect to the friction ring 74, so that no damping force is transferred from the driver 20 to the pulley 18 through the friction ring 74. If the engine load is changed by some amount, (e.g. the driver turns the air conditioner off thereby decreasing the load, or the alternator turns on thereby increasing the load), the driver 20 would move as needed based on the amount of force that must be transferred to the pulley 18 to meet the load, and accordingly, the friction ring 64 would move as needed as the driver 20 reaches a new equilibrium position. Then, at the new equilibrium position, the driver 20 would incur torsional vibrations from the crankshaft 12 and would nudge the friction ring 74 until there would be sufficient clearance between the driver 20 and the friction ring 74 that there would not be any damping force exerted by the driver 20 to the pulley 18 through the friction ring 74.

The selected threshold angle (i.e. the clearance G) may be selected based on any suitable criteria. For example, it may be selected to be larger than the amplitude of the torsional vibration in the driver 20 and crankshaft 12 at idle. Alternatively it may be selected to be larger than the amplitude of the vibration in the driver 20 and crankshaft 12 under some other conditions. For example, if the engine is in a vehicle such as a tractor-trailer that is driven at constant speed and under a relatively constant accessory load for extended periods of time, the clearance G may be selected based on the amplitude of the torsional vibrations under those conditions.

In the embodiment shown, the isolator 10 further includes a seal member 88, a seal biasing member 90 and a dust shield 92. These cooperate to prevent leakage of lubricant (e.g. grease) out from the interior space of the pulley and to inhibit dust and debris from entering into the interior space of the isolator 10. The seal member 88 additionally acts as another thrust bushing which is urged into engagement with the pulley 18 (specifically the cover member 18b), by the seal biasing member 90, so as to urge the pulley 18 and the bushing 36 over to a datum point against a shoulder on the shaft adapter 26 at one end of the support surface 34. The dust shield 92 could instead be some other component such as a torsional vibration damper that is connected indirectly to the crankshaft 12 via the driver 20a and the shaft adapter 26 to reduce the amplitude of angular reciprocation of the crankshaft 12 during torsional vibration thereof, particularly at higher RPM.

It will be noted that, in the no-load state, the springs 22 may be disengaged radially from the spring shell 64, engaging the spring shell 64 only at the spring ends 42 and 44. During operation where there is torque transfer through the isolator 10 however, there may be frictional engagement between the springs 22 and the spring shell 64 as the springs 22 are further compressed from the no-load state.

A projection 94 (Figure 1a) on the shaft adapter 26 may be passed through apertures in the dust shield 92, the biasing member 90, and the driver 20 to ensure alignment of these components with the axis A. The projection 94 could be staked afterwards so that all these components remain mounted to the shaft adapter 26 to form a subassembly.

While the friction ring 74 is shown as being frictionally engaged with the pulley 18 and drivable by the driver 20, it will be understood that the friction ring 74 could alternatively be configured to be frictionally engaged with the driver 20 and be driven by the pulley 18.

While the friction ring 74 is a ring that encompasses a radially outer surface of the pulley 18, it will be understood that the friction ring 74 could alternatively be any other suitable type of friction member that frictionally engages a portion of the pulley 18 or a portion of the driver 20.

While the engine 14 may be a vehicular engine, it will be understood that it could be a stationary engine used for an industrial application or the like. The isolator 10 described herein may be particularly suited for certain types of engine such as an engine having low displacement (e.g. less than 2 litres) and/or a diesel engine.

In some embodiments, the angular spacing between the engagement surfaces 52 and 56 on each arm 50a and 50b (including the bumper 60 if provided) may be selected to be slightly different (e.g. larger) than the angular spacing between the engagement surfaces 68a and 68b on the spring shell 64a so as to stagger the engagement and release of the springs 22 with respect to these surfaces.

In the embodiment shown, it has been described for the isolator 10 to be installed on the crankshaft 12 of an engine 14. It will be noted that the isolator 10 could alternatively be installed on the shaft of an accessory that is driven by the belt 16, such as, for example on a shaft of a steering pump. In such an embodiment, torque transfer would generally occur from the pulley 18 to the driver 20 and shaft adapter 26 through the isolation springs 22. The driver 20, in such an embodiment, would drive the shaft of the accessory instead of driving the pulley 18. Put more broadly, the isolator 10 may be used on any engine for isolating between any suitable input member (such as a belt, or a crankshaft) and any suitable output member (such as an accessory input shaft, or a belt). Additionally, the driver 20 is just one example of a first rotary drive member, and the pulley is just one example of a second rotary drive member. For example, the pulley 18 could instead be a gear that drives a gear train and that is driven be the engine crankshaft via the driver 20 and through the isolation springs 22.

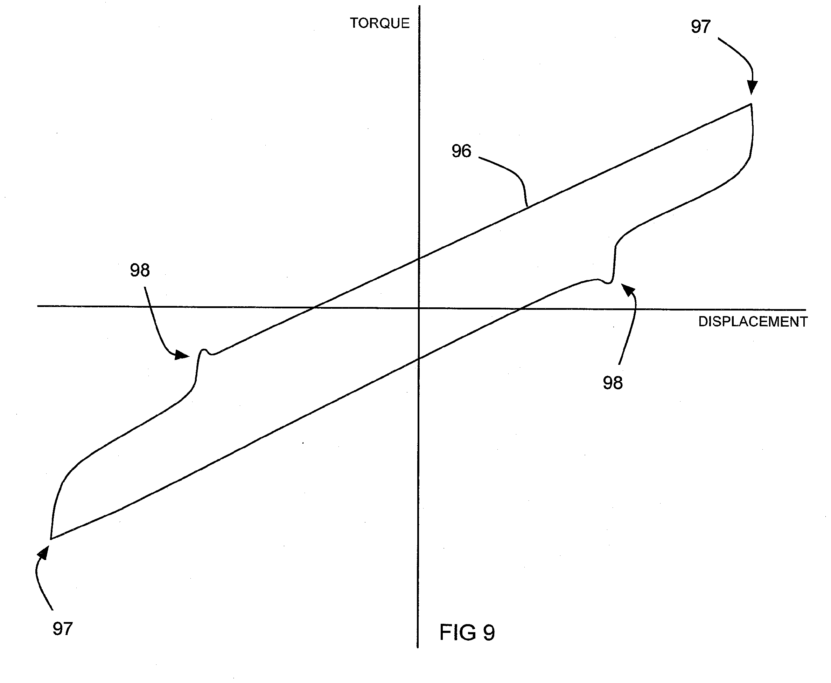

Figure 9 is a graph that illustrates the torque / displacement curve for the isolator 10. As can be seen, the curve 96 extends through a loop based on the amount of damping generally provided from whatever sources of damping are present in the isolator 10, such as, friction associated with the friction ring 74, friction between the isolator springs 22 and the spring shell 64, and friction at the bushing 36 during rotation of the pulley 18 thereon. The points 97 are the points where the driver 20 changes direction relative to the pulley 18. At these points, the driver 20 disengages from the friction ring 74 and then begins to rotate in the opposite direction, at which point the friction ring 74 is no longer applying a damping force. As can be seen, there are transition points shown at 98, which are the points where, after the driver 20 has changed direction relative to the pulley 18, the clearance G is used up and the driver 20 reengages the opposing engagement face of the friction ring 74. At this point, the total damping force being applied increases substantially instantaneously.

While the above description constitutes a plurality of embodiments of the present invention, it will be appreciated that the present invention is susceptible to further modification and change without departing from the fair meaning of the accompanying claims.

## Claims

1. An isolator (10) for isolating torsional vibration between a crankshaft (12) of an engine and an endless drive member (16), comprising: a driver (20) drivable by the crankshaft (12); a pulley (18) that is engageable with an endless drive member (16); at least one isolation spring (22, 22a, 22b) that is positioned to transfer forces between the driver (20) and the pulley (18) and to isolate torsional vibrations in the driver (20) and the pulley (18) from one another;
and a damping structure (24) configured to frictionally resist relative movement between the driver (20) and the pulley (18) beyond a selected relative threshold angle, and to permit relative movement between the driver (20) and the pulley (18) within the selected relative threshold angle without frictional resistance from the damping structure (24),
wherein the damping structure (24) includes a friction ring (74) that has a radially inner surface (76) that is frictionally engaged with a radially outer surface (78) of the pulley (18), and that includes a first driver engagement face (80) and a second driver engagement face (82) which are engageable with a first damping structure engagement face (84) and a second damping structure engagement face (86) on the driver (20).

2. An isolator (10) as claimed in claim 1, wherein the at least one isolation spring (22) includes first and second helical coil compression springs (22a, 22b).

3. An isolator (10) as claimed in claim 1, wherein the at least one isolation spring (22, 22a, 22b) includes first and second helical coil compression springs, wherein the driver (20) has a first driver arm (50a) and a second driver arm (50b), wherein the first and second driver arms (50a, 50b) have a first spring engagement surface (52) positioned for engagement with the first end of each of the first and second springs (22, 22a, 22b), and a second spring engagement surface (56) positioned for engagement with the second end of each of the first and second engagement springs (22, 22a, 22b).

4. An isolator (10) as claimed in claim 1, wherein the selected relative threshold angle is between about 7 and about 8 degrees.

5. An isolator (10) as claimed in claim 1 , wherein the selected relative threshold angle is selected to be larger than half of an amplitude of movement of the driver relative to the pulley due to torsional vibration during idling of the engine.

6. An isolator (10) as claimed in claim 1 , wherein the driver (20) has a damping structure engagement face (84) and wherein the damping structure (24) includes a friction member (74) positioned to frictionally resist relative movement between the driver (20) and the pulley (18), wherein there is a selected clearance (G1, G2) between the friction member and (74) the damping structure engagement face (84).

7. An isolator (10) as claimed in claim 1 , wherein the selected threshold angle is selected based on an amplitude of movement of the driver relative to the pulley due to torsional vibration during idling of the engine.

8. An isolator (10) as claimed in claim 1 , further comprising a spring shell (64) that at least partially surrounds the at least one isolation spring (22a, 22a, 22b), wherein the spring shell (64) includes a first spring shell portion (64a) and a second spring shell portion (64b), wherein each spring shell portion (64a, 64b) includes a spring shell portion body (69), at least one clip member (70) and at least one clip receiving shoulder (72) positioned 180 degrees from the at least one clip member (70) and configured to lockingly receive the at least one clip member (70) from the other spring shell portion (64a, 64b).

9. An isolator (10) as claimed in claim 8, wherein the spring shell (64) is surrounded by the pulley (18) on two axial sides and is made from a material that undergoes thermal expansion relative to the pulley (18) to increase the adherence of the spring shell to the pulley during operation thereof.

## Patentansprüche

1. Isolator (10) zum Isolieren von Torsionsschwingungen zwischen einer Kurbelwelle (12) eines Motors und einem endlosen Antriebselement (16), umfassend:
einen von der Kurbelwelle (12) antreibbaren Treiber (20); eine Riemenscheibe (18), die mit einem endlosen Antriebselement (16) in Eingriff bringbar ist; mindestens eine Isolationsfeder (22, 22a, 22b), die so positioniert ist, dass sie Kräfte zwischen dem Treiber (20) und der Riemenscheibe (18) überträgt und Torsionsschwingungen in dem Treiber (20) und der Riemenscheibe (18) voneinander isoliert;
und eine Dämpfungsstruktur (24), die konfiguriert ist, um einer Relativbewegung zwischen dem Treiber (20) und der Riemenscheibe (18) über einen ausgewählten relativen Schwellenwinkel hinaus reibungsmäßig zu widerstehen und eine Relativbewegung zwischen dem Treiber (20) und der Riemenscheibe (18) innerhalb des ausgewählten relativen Schwellenwinkels ohne Reibungswiderstand von der Dämpfungsstruktur (24) zu ermöglichen,
wobei die Dämpfungsstruktur (24) einen Reibring (74) beinhaltet, der eine radial innere Oberfläche (76) aufweist, die reibschlüssig mit einer radial äußeren Oberfläche (78) der Riemenscheibe (18) in Eingriff steht, und der eine erste Treibereingriffsfläche (80) und eine zweite Treibereingriffsfläche (82) beinhaltet, die mit einer ersten Dämpfungsstruktureingriffsfläche (84) und einer zweiten Dämpfungsstruktureingriffsfläche (86) auf dem Treiber(20) in Eingriff bringbar sind.

2. Isolator (10) nach Anspruch 1, wobei die mindestens eine Isolationsfeder (22) erste und zweite Schraubenwindungsdruckfedern (22a, 22b) beinhaltet.

3. Isolator (10) nach Anspruch 1, wobei die mindestens eine Isolationsfeder (22, 22a, 22b) erste und zweite Schraubenwindungsdruckfedern beinhaltet, wobei der Treiber (20) einen ersten Treiberarm (50a) und einen zweiten Treiberarm (50b) aufweist, wobei der erste und zweite Treiberarm (50a, 50b) eine erste Federeingriffsfläche (52) aufweist, die zum Eingriff mit dem ersten Ende jeder der ersten und zweiten Federn (22, 22a, 22b) positioniert ist, und eine zweite Federeingriffsfläche (56) aufweist, die zum Eingriff mit dem zweiten Ende jeder der ersten und zweiten Eingreiffedern (22, 22a, 22b) positioniert ist.

4. Isolator (10) nach Anspruch 1, wobei der ausgewählte relative Schwellenwinkel zwischen etwa 7 und etwa 8 Grad liegt.

5. Isolator (10) nach Anspruch 1, wobei der ausgewählte relative Schwellenwinkel so gewählt ist, dass er größer als die Hälfte einer Bewegungsamplitude des Treibers in Bezug auf die Riemenscheibe aufgrund von Torsionsschwingungen während des Leerlaufs des Motors ist.

6. Isolator (10) nach Anspruch 1, wobei der Treiber (20) eine Dämpfungsstruktur-Eingriffsfläche (84) aufweist und wobei die Dämpfungsstruktur (24) ein Reibungselement (74) beinhaltet, das so positioniert ist, dass es reibungsmäßig einer Relativbewegung zwischen dem Treiber (20) und der Riemenscheibe (18) widersteht, wobei ein ausgewähltes Spiel (G1, G2) zwischen dem Reibungselement und (74) der Dämpfungsstruktur-Eingriffsfläche (84) besteht.

7. Isolator (10) nach Anspruch 1, wobei der ausgewählte Schwellenwinkel basierend auf einer Bewegungsamplitude des Treibers in Bezug auf die Riemenscheibe aufgrund von Torsionsschwingungen während des Leerlaufs des Motors ausgewählt ist.

8. Isolator (10) nach Anspruch 1, ferner umfassend eine Federschale (64), die die mindestens eine Isolationsfeder (22a, 22a, 22a, 22b) zumindest teilweise umgibt, wobei die Federschale (64) einen ersten Federhausabschnitt (64a) und einen zweiten Federhausabschnitt (64b) beinhaltet, wobei jeder Federhausabschnitt (64a, 64b) einen Federhausabschnittskörper (69), mindestens ein Klammerelement (70) und mindestens eine Klammeraufnahmeschulter (72) aufweist, die 180 Grad von dem mindestens einen Klammerelement (70) entfernt angeordnet und konfiguriert ist, um das mindestens eine Klammerelement (70) von dem anderen Federschalenabschnitt (64a, 64b) verriegelnd aufzunehmen.

9. Isolator (10) nach Anspruch 8, wobei die Federschale (64) von der Riemenscheibe (18) auf zwei axialen Seiten umgeben ist und aus einem Material hergestellt ist, das in Bezug auf die Riemenscheibe (18) eine thermische Ausdehnung erfährt, um die Haftung der Federschale an der Riemenscheibe während ihres Betriebs zu erhöhen.

## Revendications

1. Isolateur (10) pour isoler des vibrations de torsion entre un vilebrequin (12) d'un moteur et un élément d'entraînement sans fin (16), comprenant : un dispositif d'entraînement (20) pouvant être entraîné par le vilebrequin (12) ; une poulie (18) pouvant entrer en prise avec un élément d'entraînement sans fin (16) ; au moins un ressort d'isolation (22, 22a, 22b) qui est positionné de manière à transférer des forces entre le dispositif d'entraînement (20) et la poulie (18) et à isoler les vibrations de torsion dans le dispositif d'entraînement (20) et la poulie (18) les unes des autres ;
et une structure d'amortissement (24) configurée pour résister par frottement au mouvement relatif entre le dispositif d'entraînement (20) et la poulie (18) au-delà d'un angle seuil relatif sélectionné, et pour permettre un mouvement relatif entre le dispositif d'entraînement (20) et la poulie (18) en-deçà de l'angle seuil relatif sélectionné, sans résistance par frottement de la part de la structure d'amortissement (24),
où la structure d'amortissement (24) comprend une bague de friction (74) qui présente une surface radialement intérieure (76) qui est en prise par friction avec une surface radialement extérieure (78) de la poulie (18), et qui comprend une première face de mise en prise du dispositif d'entraînement (80) et une seconde face de mise en prise du dispositif d'entraînement (82) qui peuvent être mises en prise avec une première face de mise en prise de la structure d'amortissement (84) et une seconde face de mis en prise de la structure d'amortissement (86) sur le dispositif d'entraînement (20).

2. Isolateur (10) selon la revendication 1, où l'au moins un ressort d'isolation (22) comprend des premier et second ressorts de compression à enroulement hélicoïdal (22a, 22b).

3. Isolateur (10) selon la revendication 1, où l'au moins un ressort d'isolation (22, 22a, 22b) comprend des premier et second ressorts de compression à enroulement hélicoïdal, où le dispositif d'entraînement (20) présente un premier bras de dispositif d'entraînement (50a) et un second bras de dispositif d'entraînement (50b), où les premier et second bras de dispositif d'entraînement (50a, 50b) présentent une première surface de mise en prise de ressort (52) positionnée pour la mise en prise avec la première extrémité de chacun des premier et deuxième ressorts (22, 22a, 22b), et une deuxième surface de mise en prise de ressort (56) positionnée pour la mise en prise avec la deuxième extrémité de chacun des premier et deuxième ressorts d'engagement (22, 22a, 22b).

4. Isolateur (10) selon la revendication 1, où l'angle seuil relatif sélectionné est compris entre environ 7 et environ 8 degrés.

5. Isolateur (10) selon la revendication 1, où l'angle seuil relatif sélectionné est choisi de manière à être supérieur à la moitié d'une amplitude de mouvement du dispositif d'entraînement par rapport à la poulie, causé par les vibrations de torsion pendant la marche au ralenti du moteur.

6. Isolateur (10) selon la revendication 1, où le dispositif d'entraînement (20) présente une face de mise en prise de structure d'amortissement (84) et où la structure d'amortissement (24) comprend un élément de friction (74) positionné pour résister par friction au mouvement relatif entre le dispositif d'entraînement (20) et la poulie (18), où il existe un jeu sélectionné (G1, G2) entre l'élément de friction et (74) la face de mise en prise de structure d'amortissement (84).

7. Isolateur (10) selon la revendication 1, où l'angle seuil sélectionné est choisi en se fondant sur une amplitude de mouvement du dispositif d'entraînement par rapport à la poulie, causé par des vibrations de torsion pendant la marche au ralenti du moteur.

8. Isolateur (10) selon la revendication 1, comprenant en outre une enveloppe de ressort (64) qui entoure au moins partiellement l'au moins un ressort d'isolation (22a, 22a, 22b), où l'enveloppe de ressort (64) comprend une première partie d'enveloppe de ressort (64a) et une seconde partie d'enveloppe de ressort (64b), où chaque partie d'enveloppe de ressort (64a) comprend un corps de partie d'enveloppe de ressort (69), au moins un élément de pince (70) et au moins un épaulement de réception de pince (72) positionné à 180 degrés de l'au moins un élément de pince (70) et configuré pour recevoir de manière verrouillée l'au moins un élément de pince (70) de l'autre partie d'enveloppe de ressort (64a, 64b).

9. Isolateur (10) selon la revendication 8, où l'enveloppe de ressort (64) est entourée par la poulie (18) sur deux côtés axiaux et est faite en un matériau qui subit une dilatation thermique par rapport à la poulie (18) afin d'augmenter l'adhérence de l'enveloppe de ressort à la poulie pendant son fonctionnement.
